# EUROPEAN PATENT APPLICATION

(11) **EP 4 446 296 A1**
(43) Date of publication of application: **16.10.2024**
(21) Application number: 23167659.4
(22) Date of filing: 13.04.2023
(51) Int. Cl.: C04B 28/08, C04B 28/12, C04B 40/00

(54) **ACTIVATOR COMPOSITION FOR MINERAL BINDER COMPRISING GROUND GRANULATED BLAST FURNACE SLAG, MINERAL BINDER COMPOSITION COMPRISING THE SAME, AND USE THEREOF**

(71) Applicant: Sika Technology AG, 6340 Baar (CH)
(72) Inventor: JONES, Panassakorn, Sandy, SG19 1RR (GB); EVANS, Craig, Farnworth Bolton, BL4 7JN (GB); LISKA, Martin, Cambridge, CB23 8ST (GB); PRAT, Evelyne, 93500 Pantin (FR)
(74) Representative: Sika Patent Attorneys

(57) **Abstract**

The present invention relates to an activator composition for mineral binders comprising ground granulated blast furnace slag (GGBS), especially at least 80 w% or higher of GGBS. The activator comprises aluminium sulfate, sodium carbonate or sodium bicarbonate, and hydraulic lime or hydrated lime. The present invention also relates to mineral binder compositions comprising ground granulated blast furnace slag and the activator composition and uses thereof.

## Description

### Technical Field

The present invention relates to an activator composition for mineral binders comprising ground granulated blast furnace slag (GGBS), especially at least 80 w% or higher of GGBS. The activator composition comprises aluminium sulfate, sodium carbonate or sodium bicarbonate, and hydraulic lime or hydrated lime. Mineral binders with high content of GGBS are useful to replace Portland cement in mineral binder compositions. The present invention also relates to mineral binder compositions comprising ground granulated blast furnace slag and the activator composition and uses thereof.

### Background of the invention

Many building materials, especially concrete and mortars, rely on mineral binders. The most abundant mineral binders are cements and especially Ordinary Portland Cement (OPC). However, the use of cements and especially of Ordinary Portland Cement has a high environmental footprint. One major reason are the high CO₂ emissions associated with the manufacture of cements. Many efforts have thus been made to at least partially replace cements as binders from building materials.

One possibility is the use of materials with cementitious properties, pozzolans and/or latent hydraulic materials as cement replacement. An especially appealing material of this kind is slag as it is readily available as a by-product of various metallurgical processes, especially iron and steelmaking, in large quantities.

One specific type of slag is ground granulated blast furnace slag (GGBS). GGBS is obtained by quenching molten iron slag from a blast furnace in water or steam, to produce a glassy, granular product that is then dried and ground into a fine powder. It is known that GGBS can be used to manufacture blended cements.

However, especially at higher levels of GGBS in blended cements, for example levels of 50 - 80 w% of GGBS and above, a delayed set, delayed strength development, and lower strength measured at conventional time frames of 28 days is often observed when hardening such blended cements for example as part of a concrete or mortar formulation. Thus, especially at high levels of GGBS in blended cements, activation is needed.

It is well known that sulfatic activation and activation with alkalines, for example carbonates, is suitable for GGBS.

EP 1 195 361 discloses the use of CaO, Ca(OH)₂, alkali metal sulfates or alkali metal carbonates together with sulfatic activation for GGBS.

WO 2012/126994 discloses an activator composition useful for GGBS comprising an alkali metal or earth alkali metal salt, a metal sulfate, and optionally a third component, preferably a nitrate.

Activators of the known prior art often do not lead to sufficient early strength, especially where high levels of GGBS are present in a mineral binder. It is therefore desirable to provide improved activators for mineral binders comprising ground granulated blast furnace slag. Especially activators for mineral binders having high content of GGBS, for example up to 80 w% or higher.

### Summary of the invention

It is an objective of the present invention to provide an activator composition for mineral binder compositions comprising ground granulated blast furnace slag. Especially, an activator composition for mineral binder compositions where GGBS makes up the largest part of the mineral binder, such as at least 80 w% or higher. It is another objective of the present invention to provide a mineral binder composition with a mineral binder comprising ground granulated blast furnace slag and an activator for the mineral binder. Especially, the content of GGBS of the mineral binder in such mineral binder compositions is at least 80 w% or higher. It is also an objective of the present invention to provide for uses of an activated mineral binder composition comprising a mineral binder based on ground granulated blast furnace slag.

It has surprisingly been found that a combination of aluminium sulfate, sodium carbonate or sodium bicarbonate, and hydraulic lime or hydrated lime is an advantageous activator for mineral binders comprising ground granulated blast furnace slag, especially where the amount of slag in such binder is at least 80 w% or higher.

Without wishing to be bound by theory, it is believed that the combination of aluminium sulfate and sodium carbonate or sodium bicarbonate accelerates the formation of calcium silicate hydrates (CSH) from GGBS and the formation of ettringite. The additional use of hydraulic lime or hydrated lime increases the pH of the reaction mix which additionally facilitates the reaction.

The objectives of the present invention are therefore achieved by the subject matter of the independent claims.

Further aspects of the invention are the subject of further independent claims. Preferred embodiments are the subject of dependent claims.

### Ways for carrying out the invention

In a first aspect the present invention relates to an activator composition for a mineral binder composition comprising ground granulated blast furnace slag, said activator composition comprising or consisting of
a) aluminium sulfate,
b) sodium carbonate or sodium bicarbonate, and
c) hydraulic lime or hydrated lime.

The term "activator" within the present context refers to materials with the ability to increase the reactivity of a mineral binder comprising ground granulated blast furnace slag (GGBS) with water. An activation or increase of reactivity in the present sense can be measured, for example, by the determination of strength after a defined time. A suitable method is, for example, the measurement of compressive strength according to standard EN 12390-3. In such method, a mixture comprising a mineral binder comprising GGBS, an activator, and water shows a higher compressive strength within a defined time after mixing, for example after 1d or after 3d, as compared to the same mixture without any activator added. Another suitable method is, for example, the measurement of initial setting time. Initial setting time can, for example, be measured by ultrasonic pulse velocity. In such method, a mixture comprising a mineral binder comprising GGBS, an activator, and water shows a reduced initial setting time as compared to the same mixture without any activator added.

A mineral binder composition within the present context comprises or consists of a mineral binder. A mineral binder within the present context is a binder comprising ground granulated blast furnace slag (GGBS). Especially, the amount of ground granulated blast furnace slag is at least 80 w%, preferably at least 90 w%, relative to the total dry weight of the mineral binder. A mineral binder may additionally comprise cements, calcium sulfate, pozzolanes, and/or latent hydraulic materials. Cements in particular are Portland cements, especially Portland cements and Portland composite cements according to standard EN 197-1, in particular a cement of type CEM I, calcium aluminate cements according to standard EN 14647:2005, and/or calcium sulfoaluminate cements. Pozzolanes and/or latent hydraulic materials especially are type II concrete additives with latent hydraulic and/or pozzolanic character according to EN 206-1. Examples for pozzolanes and/or latent hydraulic materials are crude clay, calcined clay, especially metakaolin, kiln dust, microsilica, fly ash, silica fume, zeolite, rice husk ash, burnt oil shale, slags different from GGBS, and natural pozzolane such as pumice and trass.

It is particularly preferred that the mineral binder consists of mixtures of Portland cement or Portland composite cement according to EN 197-1 with ground granulated blast furnace slag.

In addition to a mineral binder, a mineral binder composition may comprise aggregates and/or fillers, admixtures, and water. A mineral binder composition especially is a concrete or a mortar composition.

Aggregates can be any material that is non-reactive in the hydration reaction of mineral binders. Aggregates can be any aggregate typically used for construction materials. Typical aggregates are for example rock, crushed stone, gravel, sand, especially quartz sand, river sand and/or manufactured sand.

The term "fillers" refers to calcareous or siliceous materials of fine particle size. A very typical filler is ground limestone. The particle size of fillers is lower than the particle size of aggregates. For example, fillers may have a particle size of below 0.063 mm. Especially, 90% of the fillers have a particle size of lower than 0.063 mm.

Admixtures are especially selected from the list consisting of plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, steel passivating agents, and mixtures thereof.

Water may optionally be present in a mineral binder composition. A mineral binder composition may therefore be a dry composition, especially in the form of a powder, or a wet composition, especially in the form of a slurry or paste.

A ground granulated blast furnace slag (GGBS) within the present context is obtained by quenching molten iron slag from a blast furnace in water or steam, to produce a glassy, granular product that is then dried and ground into a fine powder. According to embodiments, GGBS has a Blaine fineness of between 2000 - 12000 cm²/g, preferably between 4000 - 6000 cm²/g or 6000 - 8000 cm²/g. Blaine fineness can be measured according to standard EN 196-6. According to embodiments, the glassiness of a GGBS of the present invention is at least 80%, preferably at least 90%. According to embodiments, a GGBS of the present invention has a content of SiO₂ of 34 - 40 w%, a content of CaO of 34 - 37 w%, a content of Al₂O₃ of 8 - 12 w% and has a weight ratio of (CaO + MgO) / (Al₂O_{3 +} SiO₂) of between 0.8 - 1.1.

Aluminum sulfate within the present context preferably is in the form of aluminium sulfate hydrate, especially Al₂(SO₄)₃ • 14 H₂O. All quantities of aluminium sulfate refer to Al₂(SO₄)₃ without water of crystallization throughout this document.

The term "hydraulic lime" especially refers to natural hydraulic lime, formulated lime, and/or hydraulic lime, as described in the standard EN 459-1:2015. A natural hydraulic lime (NHL) is a material derived solely from mineral deposits and naturally containing all elements (usually limestone, clay and impurities) to produce a hydraulic lime in a calcination process. NHL in the context of the present invention preferably belongs to any of the classes NHL2, NHL3.5 or NHL5 according to EN 459-1:2015. A hydraulic lime (HL) is a material produced from limestone by thermal decomposition in a calcination. Hydraulic lime essentially consists of CaO and/or Ca(OH)₂ and additional siliceous and/or alumosiliceous materials. HL in the context of the present invention preferably belongs to any of the classes HL2, HL3.5 or HL5 according to EN 459-1:2015. Formulated lime (FL) is a material with hydraulic properties and which is based on air lime or NHL with additional hydraulic and/or pozzolanic materials added. FL preferably belongs to class FL A. Within the context of the present invention FL is essentially free of Portland cement.

Hydrated lime is also called slaked lime and preferably is according to standard EN 459-1:2015. Hydrated lime especially mainly consists of Ca(OH)₂ and/or Mg(OH)₂.

Particularly preferably, the hydraulic lime is natural hydraulic lime.

According to embodiments, the activator composition of the present invention comprises (in each case relative to the total dry weight of the activator composition)
a) 8 - 40 w%, preferably 11 - 40 w%, especially 15 - 20 w%, of aluminium sulfate,
b) 8 - 72 w%, preferably 11 - 60 w%, especially 40 - 55 w% of sodium carbonate or sodium bicarbonate,
c) 20 - 84 w%, preferably 29 - 78 w%, especially 30 - 40 w% of hydraulic lime or hydrated lime.

The activator of the present invention may comprise or consist of aluminium sulfate, sodium carbonate, and hydraulic lime. The activator of the present invention may comprise or consist of aluminium sulfate, sodium bicarbonate, and hydraulic lime. The activator of the present invention may comprise or consist of aluminium sulfate, sodium carbonate, and hydrated lime. The activator of the present invention may comprise or consist of aluminium sulfate, sodium bicarbonate, and hydrated lime.

The activator composition can be in the form of a one-component composition. A one-component composition contains all constituents in one compartment. A one-component composition has the advantage that dosage is simple and less problems with wrong dosages may occur. It is preferred within the present context that the activator composition is a one-component composition comprising aluminium sulfate, sodium carbonate or sodium bicarbonate, and hydraulic lime or hydrated lime.

The activator composition can be in the form of a two-component or a multiple-component composition. A two component or a multiple-component composition contains the individual constituents in two or more spatially separated containers. A two-component or a multiple-component composition may have the advantage of improved shelf life and may also facilitate dosage adjustment of individual constituents.

The activator composition may be in the form of a free flowing powder, a granulate pellet, flakes, or a compacted body. The activator composition may be in the form of a slurry or solution in water.

The activator composition may comprise constituents in addition to the aluminium sulfate, sodium carbonate or sodium bicarbonate, and hydraulic lime or hydrated lime. Such additional constituents are, for example, selected from fillers, especially calcium carbonate fillers, carrier materials such as diatomaceous earth, free-flow agents such as precipitated silica, and solvents, especially water. According to preferred embodiments, the activator composition consists of aluminium sulfate, sodium carbonate or sodium bicarbonate, and hydraulic lime or hydrated lime.

Preferably, the activator composition additionally comprises a filler, especially calcium carbonate, in an amount to complement to 100 w%.

In another aspect, the present invention relates to a mineral binder composition comprising
a) a mineral binder comprising ground granulated blast furnace slag,
b) an activator composition as described above,
c) optionally aggregate,
d) optionally further admixtures,
e) optionally water.

All embodiments as described in other aspects also apply to this aspect.

It is in particular preferred in a mineral binder composition of the invention that the amount of ground granulated blast furnace slag is at least 80 w%, preferably at least 90 w%, relative to the total dry weight of the mineral binder.

It is particularly preferred in a mineral binder composition of the invention that the mineral binder consists of a mixture of Portland cement or Portland composite cement according to EN 197-1 with ground granulated blast furnace slag. Very preferably, in a mineral binder composition of the invention, the mineral binder consists of not more than 20 w%, preferably not more than 10 w%, of Portland cement or Portland composite cement according to EN 197-1, and not less than 80 w%, preferably not less than 90 w%, of ground granulated blast furnace slag, in each case relative to the total dry weight of the mineral binder.

It is preferred that aluminium sulfate is present in a mineral binder composition of the invention in an amount of 0.1 - 5 w%, preferably 0.5 - 2 w%, more preferably 1.0 - 1.5 w%, relative to the total dry weight of the mineral binder.

It is preferred that sodium carbonate or sodium bicarbonate is present in a mineral binder composition of the invention in an amount of 0.1 - 5 w%, preferably 0.5 - 4 w%, more preferably 2.5 - 3.5 w%, relative to the total dry weight of the mineral binder.

It is preferred that hydraulic lime or hydrated lime is present in a mineral binder composition of the invention in an amount of 0.1 - 20 w%, preferably 1-10 w%, more preferably 2 - 5 w%, relative to the total dry weight of the mineral binder.

In case the mineral binder composition comprises further admixtures, such admixtures do not contain aluminium sulfate, sodium carbonate or sodium bicarbonate, hydraulic lime, or hydrated lime.

Especially, a mineral binder composition additionally comprises a superplasticizer selected from the group of lignosulfonates, gluconates, naphtalenesulfonates, melamine sulfonates, vinyl copolymers and/or polycarboxylates, in particular polycarboxylate ethers or polycarboxylate esters with alkylene oxide side chains. Surprisingly, it has been found that these plasticizers are highly compatible with the inventive activator composition. This allows adjusting the consistency or slump of wet activated mineral binder compositions. It is possible to produce wet activated mineral binder compositions with a consistency class S4 (slump value: 160 - 210 mm) or even class S5 (slump value ≥ 220 mm). S4 and S5 are consistency classes as defined in EN 206-1.

In another aspect the present invention relates to the use of a mineral binder composition of the present invention as a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar. A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

In another aspect the present invention relates to a cured body obtained by hardening a mineral binder composition as described above with water.

In another aspect the present invention relates to a method for the activation of a mineral binder, said method comprising the steps of
(i) providing a mineral binder composition comprising or consisting of a mineral binder, said mineral binder comprising ground granulated blast furnace slag,
(ii) providing an activator composition as described above,
(iii) mixing said mineral binder composition with said activator composition to obtain an activated mineral binder composition.

All embodiments described in other aspects also apply to this aspect.

The mixing of the mineral binder composition and of the activator composition is not particularly limited and may be done by any means known to the person skilled in the art. In particular, means to produce dry mortars, wet mortars, or concrete can be used for the mixing.

The activator composition may be added to a dry mineral binder composition. Thereby, a dry activated mineral binder composition is obtained. The term "dry" within the present context means that the amount of water present is lower than 10 w%, preferably lower than 2 w%, especially lower than 1 w%, relative to the total weight of the respective composition. A dry activated mineral binder composition may be stored before further use, for example in the form of a bagged dry mortar.

The activator composition may be added to a dry mineral binder composition together with the mixing water and/or shortly after the mixing water. Thereby, a wet activated mineral binder composition is obtained. A wet mineral binder composition especially is a wet mortar or a concrete. A wet mineral binder composition should be further used within a short time as it will start to set and cure.

The activator composition may be added to a mineral binder. This is especially the case where the mineral binder composition consists of a mineral binder. Thereby, an activated mineral binder is obtained. It is for example possible to add the activator composition before and/or during the grinding of the mineral binder. It is also possible to intermix the activator composition and the mineral binder after grinding.

Where the activator composition is a two-component or a multiple-component composition, it is possible to separate the mixing of individual components with the mineral binder composition into two or more steps. It is, for example, possible to add a first component to a dry mineral binder composition to obtain a dry activated mineral binder composition and to add a second component together with or shortly after the mixing water to obtain a wet activated mineral binder composition.

### Examples

The following table 1 shows an overview of raw materials used.

**Table 1: raw materials**

| | |
|---|---|
| GGBS | Ground granulated blast furnace slag |
| | Fineness appr. 4500 cm²/g; >95% glassy; Bulk density 0.9 - 1.2 g/cm³ |
| Cement | CEM I 52.5N according to standard EN 197-1 |
| Hydrated lime | Ca(OH)₂ supplied by Sigma-Aldrich (>95.0% purity) |
| Na₂CO₃ | Sodium carbonate supplied by Sigma-Aldrich (>99.5% purity) |
| Al₂(SO₄)₃ | Al₂(SO₄)₃ • 14 H₂O supplied by Sigma-Aldrich (>97% purity) |
| Filler | Combination of quartz sand and ground calcium carbonate |
| Additives | Combination of redispersible polymer powder, superplasticizer, defoamer, thickener, retarder |

### Example 1

Tests were done by mixing all constituents in the amount as indicated in the following table 2 on a Hobart mixer until visually homogeneous. Water was then added in an amount to realize a water to powder weight ratio of 0.21 and mixing was continued for 3 minutes. Compressive strength and flexural strength were measured according to standard EN 1015-11:2019 after curing for 1d. Results are given in the below table 2. An increase in the measured compressive and/or flexural strength after 1d of curing is indicative for activation of the GGBS.

**Table 2: Examples 1- 3 (comparative) and 4 - 9 (inventive)**

| **Example** | **1** | **2** | **3** | **4** | **5** | **6** | **7** | **8** | **9** |
|---|---|---|---|---|---|---|---|---|---|
| GGBS | 34.4 | 34.4 | 34.4 | 34.4 | 34.4 | 34.4 | 34.4 | 34.4 | 34.4 |
| Cement | 8.6 | 8.6 | 8.6 | 8.6 | 8.6 | 8.6 | 8.6 | 8.6 | 8.6 |
| Al₂(SO₄)₃ | 1.38 | 0.92 | | 0.24 | 0.31 | 0.43 | 0.55 | 1.10 | 0.84 |
| Na₂CO₃ | 1.38 | | 0.92 | 0.84 | 0.31 | 1.47 | 1.10 | 0.55 | 0.24 |
| Hydrated lime | | 1.84 | 1.84 | 1.67 | 2.13 | 0.86 | 1.10 | 1.10 | 1.67 |
| Filler | 54.1 | 54.1 | 54.1 | 54.1 | 54.1 | 54.1 | 54.1 | 54.1 | 54.1 |
| Additives | 0.07 | 0.07 | 0.07 | 0.07 | 0.07 | 0.07 | 0.07 | 0.07 | 0.07 |
| C.S. 1d [MPa] | 0 | 2.5 | 3.1 | 3.8 | 3.0 | 5.2 | 5.3 | 3.2 | 3.0 |
| F.S. 1d [MPa] | 0 | 0.8 | 1.1 | 1.3 | 1 | 2.0 | 1.9 | 0.7 | 0.8 |

### Example 2

A dry mortar composition **M1** was prepared by mixing
a) 37.5 w% of a mineral binder consisting of
   80 w% ground granulated blast furnace slag and 20 w% Portland cement,
b) 2.4 w% of an activator composition consisting of
   50 w% hydrated lime, 20 w% sodium carbonate, 30 w% aluminium sulfate anhydr.,
c) 57.2 w% of sand,
d) 2.9 w% of further admixtures.

All constituents were dry mixed in a Hobart mixer until visually homogeneous.

For the performance tests, the dry mortar was mixed with water in a water to powder weight ratio of 0.15 and tested according to relevant standards. The following table 2 shows an overview of test results.

**Table 3: Test results**

| Dry mortar composition | **M1** |
|---|---|
| 28d compressive strength according to EN 12190 [MPa] | 55.8 |
| 28d bonding strength according to EN 1542 [MPa] | 1.7 |
| 28d capillary water absorption according to EN 13057 [kg/m²*h] | 0.27 |
| Water vapor resistance measured according to EN 1015-19 [µ] (lower /upper hygroscopic range) | 26 / 61 |

The results of table 3 show that a mineral binder composition of the present invention delivers compressive strength which is acceptable for many practical applications and shows very good bond strength and resistance to water intake. A mineral binder composition of the present invention can therefore, for example, be used as a waterproofing mortar.

The wet mix of M1 was also easily sprayable by standard renderer's machinery.

## Claims

1. An activator composition for a mineral binder composition comprising ground granulated blast furnace slag, said activator composition comprising or consisting of
a) aluminium sulfate,
b) sodium carbonate or sodium bicarbonate, and
c) hydraulic lime or hydrated lime.

2. The activator composition as claimed in claim 1, **characterized in that** it comprises (in each case relative to the total dry weight of the activator composition)
a) 8 - 40 w%, preferably 11 - 40 w%, especially 15 - 20 w%, of aluminium sulfate,
b) 8 - 72 w%, preferably 11 - 60 w%, especially 40 - 55 w% of sodium carbonate or sodium bicarbonate,
c) 20 - 84 w%, preferably 29 - 78 w%, especially 30 - 40 w% of hydraulic lime or hydrated lime.

3. The activator composition according to at least one of the previous claims, **characterized in that** it additionally comprises a filler, especially calcium carbonate, in an amount to complement to 100 w%.

4. The activator composition as claimed in at least one of the previous claims, **characterized in that** the hydraulic lime is natural hydraulic lime.

5. A mineral binder composition comprising
a) a mineral binder comprising ground granulated blast furnace slag,
b) an activator composition according to at least one of claims 1 - 4,
c) optionally aggregate,
d) optionally further admixtures,
e) optionally water.

6. The composition as claimed in claim 5, **characterized in that** the amount of ground granulated blast furnace slag is at least 80 w%, preferably at least 90 w%, relative to the total dry weight of the mineral binder.

7. The composition as claimed in at least one of claims 5 and 6, **characterized in that** the mineral binder consists of a mixture of Portland cement or Portland composite cement according to EN 197-1 with ground granulated blast furnace slag.

8. The composition as claimed in claim 7, **characterized in that** the mineral binder consist of not more than 20 w%, preferably not more than 10 w%, of Portland cement or Portland composite cement according to EN 197-1, and not less than 80 w%, preferably not less than 90 w%, of ground granulated blast furnace slag, in each case relative to the total dry weight of the mineral binder.

9. The composition as claimed in at least one of claims 5-8, **characterized in that** aluminium sulfate is present in the activated mineral binder composition in an amount of 0.1 - 5 w%, preferably 0.5 - 2 w%, more preferably 1.0 - 1.5 w%, relative to the total dry weight of the mineral binder.

10. The composition as claimed in at least one of claims 5-9, **characterized in that** sodium carbonate or sodium bicarbonate is present in the activated mineral binder composition in an amount of 0.1 - 5 w%, preferably 0.5 - 4 w%, more preferably 2.5 - 3.5 w%, relative to the total dry weight of the mineral binder.

11. The composition as claimed in at least one of claims 5 - 10, **characterized in that** hydraulic lime or hydrated lime is present in the activated mineral binder composition in an amount of 0.1 - 20 w%, preferably 1 - 10 w%, more preferably 2 - 5 w%, relative to the total dry weight of the mineral binder.

12. Use of a mineral binder composition as claimed in at least one of claims 5 - 11 as a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar.

13. A cured body obtained by hardening a mineral binder composition as claimed in at least one of claims 5 - 11 with water.

14. A method for the activation of a mineral binder, said method comprising the steps of
(i) providing a mineral binder composition comprising or consisting of a mineral binder, said mineral binder comprising ground granulated blast furnace slag,
(ii) providing an activator composition according to at least one of claims 1 - 4,
(iii) mixing said mineral binder composition with said activator composition to obtain an activated mineral binder composition.
